(19) Europäisches Patentamt
European Patent Office
Office européen des brevets

(11) **EP 2 557 354 A1**

(12) **EUROPEAN PATENT APPLICATION**
published in accordance with Art. 153(4) EPC

(43) Date of publication:
**13.02.2013 Bulletin 2013/07**

(51) Int Cl.:
***F21S 2/00*** (2006.01)     ***G02F 1/13357*** (2006.01)
***F21Y 101/02*** (2006.01)

(21) Application number: **11766023.3**

(22) Date of filing: **08.04.2011**

(86) International application number:
**PCT/JP2011/058945**

(87) International publication number:
**WO 2011/126123 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2011  JP 2011037572**
**09.04.2010  JP 2010090955**

(71) Applicant: **Sharp Kabushiki Kaisha**
**Osaka-shi, Osaka 545-8522 (JP)**

(72) Inventors:
• **KURIMOTO, Eiji**
**Osaka-shi, Osaka 545-8522 (JP)**

• **ISHIZAKA, Takuya**
**Osaka-shi, Osaka 545-8522 (JP)**
• **IKUTA, Kazuya**
**Osaka-shi, Osaka 545-8522 (JP)**
• **NISHIOKA, Sumito**
**Osaka-shi, Osaka 545-8522 (JP)**
• **KOKUBO, Fumio**
**Osaka-shi, Osaka 545-8522 (JP)**
• **SAKAI, Keiji**
**Osaka-shi, Osaka 545-8522 (JP)**

(74) Representative: **Müller - Hoffmann & Partner**
**Patentanwälte**
**Innere Wiener Straße 17**
**81667 München (DE)**

(54) **LIGHT SOURCE MODULE AND ELECTRONIC APPARATUS PROVIDED WITH SAME**

(57)      In order to suppress spread of light in a direction (shorter side direction) perpendicular to a direction (longer side direction) in which a light source is directed, the light source module of the present invention includes a light guide plate (20), an LED (12) for emitting light toward at least one edge surface in the longer side direction of the light guide plate (20), and a microlens group (20b) which (i) is provided on a lower surface (20c) opposite to an emission surface (20d) of the light guide plate (20) and (ii) causes light guided in the light guide plate (20) to be extracted through the emission surface (20d). The light source module further includes curved plane structures (20a) which are (i) made up of curved planes whose ridges (20e) extend in the longer side direction and (ii) provided in the emission surface (20d).

FIG. 1

**EP 2 557 354 A1**

**Description**

Technical Field

The present invention relates to a light source module and an electronic apparatus including the light source module. Specifically, the present invention relates to (i) a light source module for use as a backlight which includes a side edge (also called as "side light") type light guide plate for causing light, emitted from a light source, to exit through a surface of the light guide plate and (ii) an electronic apparatus including the light source module. Note that such a backlight is provided in, for example, a liquid crystal display device so as to reduce a thickness of the liquid crystal display device itself.

Background Art

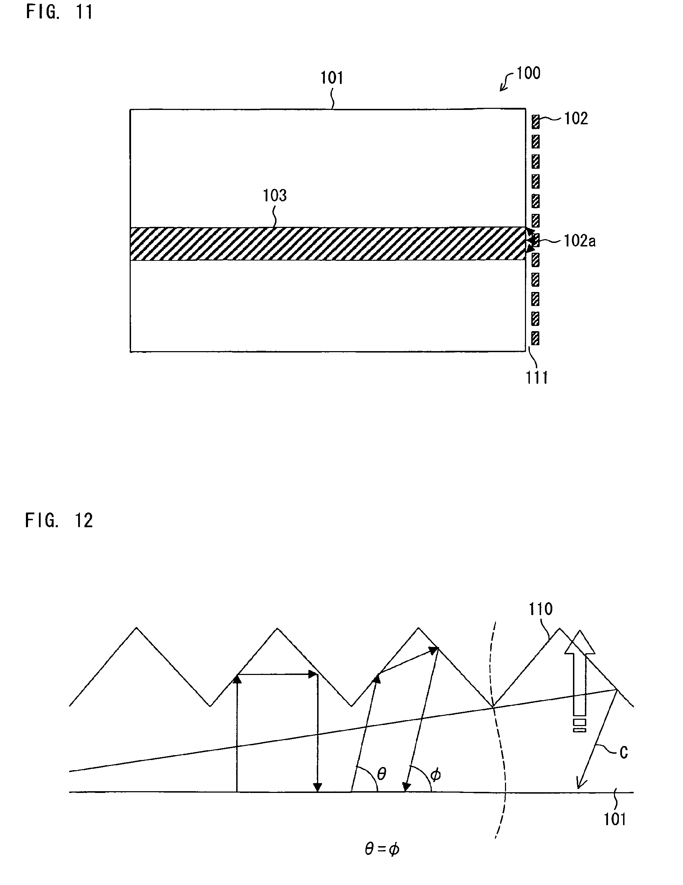

In recent years, in order to reduce a thickness of a liquid crystal display device, a backlight has been widely used which includes a side edge type light guide plate for causing light, emitted from a light source, to exit through a surface of the light guide plate.
As an example of such a side edge type light guide plate, Patent Literature 1 discloses a planar illumination device. Fig. 11 is a view illustrating the planar illumination device of Patent Literature 1. A planar illumination device 100 of Patent Literature 1 includes a light guide plate 101 whose main surface has prism structures (see Fig. 11). Moreover, a plurality of LED light sources 102 are provided in the vicinity of an edge surface 111 perpendicular to the main surface. In a case where a light source 102a, which is one of the plurality of LED light sources 102, is controlled to emit light by selective turning-on means, the light (i) enters the light guide plate 101 via the edge surface 111 and then (ii) travels in a leftward direction in Fig. 11 while being hardly spread in up and down directions in Fig. 11, due to a function of the prism structure formed in the main surface of the light guide plate 101. This forms a belt-shaped illumination area 103.
Fig. 12 is a cross sectional view illustrating a configuration of a prism structure 110 of the planar illumination device disclosed in Patent Literature 1. As is shown by a cross section of the light guide plate 101 illustrated in Fig. 12, a first prism plane totally reflects light which has traveled at an angle $\theta$ (with respect to a flat plane) and reached the first prism plane. Then, the light reflected by the first prism plane (i) reaches a second prism plane adjacent to the first prism plane and (ii) is totally reflected by the second prism plane. The light reflected by the second prism plane then reaches the flat plane at an angle $\varphi$ on the cross section. In this case, $\varphi = e$. In the planar illumination device of Patent Literature 1, a member such as a dotted white reflection plane is provided on the flat plane so that light is uniformly emitted through the main surface of the light guide plate 101.
For example, Patent Literature 2 discloses a configuration in which V-shaped grooves are formed in a surface of a light guide plate which surface is opposite to an emission surface.

Citation List

[Patent Literatures]

[Patent Literature 1]
Japanese Patent Application Publication Tokukai No. 2009-283383 A (Publication date: December 3, 2009)
[Patent Literature 2]
Japanese Patent Application Publication Tokukai No. 2009-31445 A (Publication date: February 12, 2009)

Summary of Invention

Technical Problem

However, the planar illumination device of Patent Literature 1 has the following problem.
That is, the prism structure 110 highly effectively confine light to the light guide plate, provided that the light is guided at a particular angle $\theta$. However, the prism structure 110 cannot confine light such as light C, which is guided at a small angle $\theta$ with respect to the flat plane. The light C widely spreads (i) in a direction (i.e., a longer side direction of the light guide plate) in which the light source is directed and (ii) in a perpendicular direction (i.e., a shorter side direction of the light guide plate). In view of this, the light C is mostly reflected by a prism plane which is not in the illumination area 103 (see Fig. 12). The reflected light reaches an area immediately below such a prism plane, and is then scattered by the flat plane so as to be emitted through the prism structure 110. As such, the light C (which is guided at a small

angle $\theta$ with respect to the flat plane) may be emitted from a location other than the illumination area 103.

As above described, the light guide plate having the conventional configuration cannot prevent light, guided at a small angle with respect to the flat plane, from being emitted through an area other than the illumination area 103 which is originally intended to emit light. As a result, the illumination area 103 itself spreads (i) in the direction (longer side direction) in which the light source is directed and (ii) in the perpendicular direction (shorter side direction).

The present invention is accomplished in view of the conventional problem, and its object is to provide (i) a light source module which can suppress spread of light in a direction (shorter side direction) perpendicular to a direction (longer side direction) in which the light source is directed and (ii) an electronic apparatus including the light source module.

Solution to Problem

In order to attain the object, a light source module of the present invention includes: a light guide plate; a plurality of light sources configured to emit light entering the light guide plate via at least one of edge surfaces that the light guide plate has in a longer side direction of the light guide plate; a plurality of light path changing sections for causing light, guided in the light guide plate, to be extracted through an emission surface of the light guide plate, the plurality of light path changing sections being provided on a surface of the light guide plate which surface is opposite to the emission surface; and a plurality of curved plane structure sections formed in the emission surface, the plurality of curved plane structure sections being made up of respective curved planes whose ridges extend in the longer side direction.

According to the configuration, the plurality of curved plane structure sections, made up of respective curved planes whose ridges extend in the longer side direction, are formed in the emission surface of the light guide plate. That is, the plurality of curved plane structure sections are formed in the longer side direction. Meanwhile, on the surface opposite to the emission surface, the plurality of light path changing sections are provided for causing light guided in the light guide plate to be extracted. Each of the plurality of light path changing sections changes an angle of light, guided in the light guide, so that the light exits from the light guide without being subjected to total reflections in the longer and shorter side directions. Each of the plurality of curved plane structure sections is made up of a curved plane whose plane shape is continuously changed in the shorter side direction. With the configuration, light guided at various angles in the shorter side direction will be efficiently extracted, provided that the light (i) has been changed in direction (i.e., light path is changed) by the plurality of light path changing sections and (ii) does not satisfy the total reflection condition in the longer side direction on the emission surface. That is, the light, which does not satisfy the total reflection condition in the longer side direction, will be emitted from the light guide plate without being totally reflected by the emission surface, even thought the light has reached the emission surface at various angles in the shorter side direction. On the other hand, light will not be emitted from the light guide plate, provided that the light (i) has been changed in direction by the light path changing section but (ii) still satisfies the total reflection condition of the emission surface in the longer side direction. Consequently, the light is to be guided in the light guide plate, while being prevented from spreading in the shorter side direction. Therefore, according to the configuration of the present invention, it is possible to provide a light source module which can suppress spread of light in the direction (shorter side direction) which is perpendicular to the direction in which the light source is directed.

Advantageous Effects of Invention

According to the present invention, it is possible to suppress spread of light in the direction (shorter side direction) perpendicular to the direction (longer side direction) in which the light source is directed.

For a fuller understanding of the other objects, natures, excellent points, and advantages of the present invention, reference should be made to the ensuing detailed description taken in conjunction with the accompanying drawings.

Brief Description of Drawings

Fig. 1

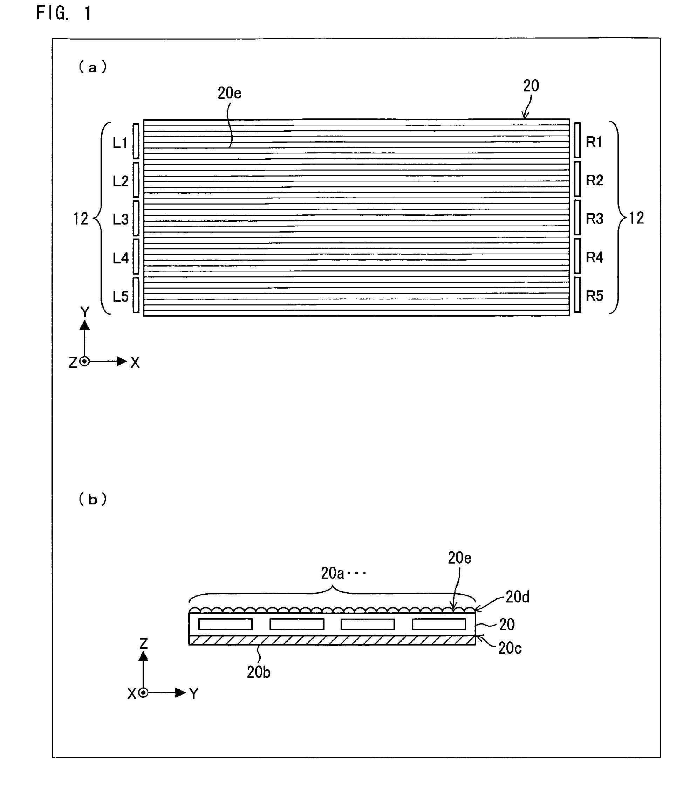

Fig. 1 schematically illustrates a configuration of a light source module of the present invention. (a) of Fig. 1 is a top view and (b) of Fig. 1 is a lateral view.
Fig. 2

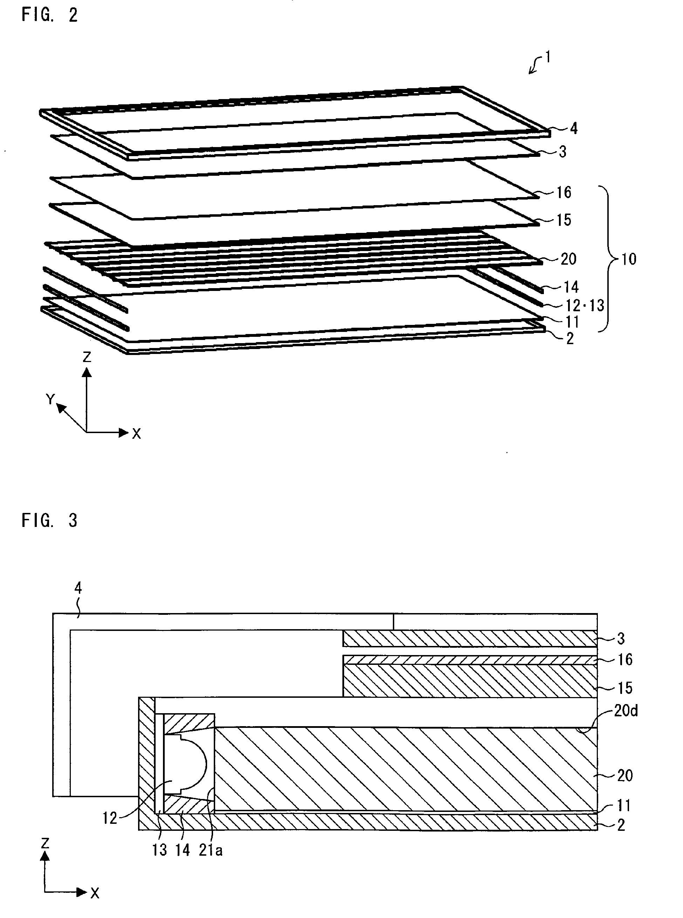

Fig. 2 is an exploded perspective view illustrating a configuration of a liquid crystal display device including the light source module.
Fig. 3
Fig. 3 is a cross sectional view illustrating a partial configuration of a liquid crystal display device including the light source module.

Fig. 4

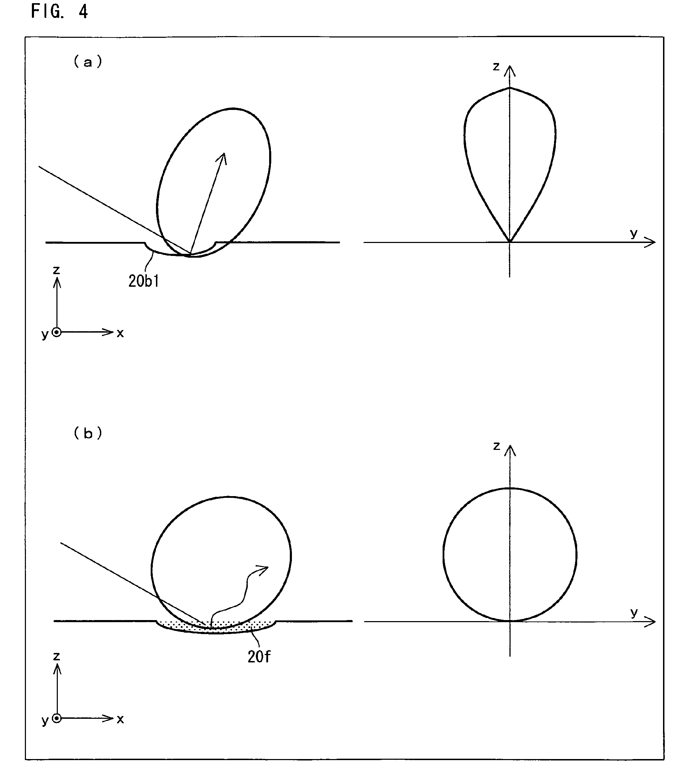

(a) of Fig. 4 illustrates how light is diffused by one of microlenses contained in a microlens group, where a left part is a schematic view illustrating a scattering characteristic on an x-z plane and a right part is a schematic view illustrating a scattering characteristic on a y-z plane. (b) of Fig. 4 illustrates how light is diffused by a diffusion material (scatterer), where a left part is a schematic view illustrating a scattering characteristic on an x-z plane and a right part is a schematic view illustrating a scattering characteristic on a y-z plane.

Fig. 5

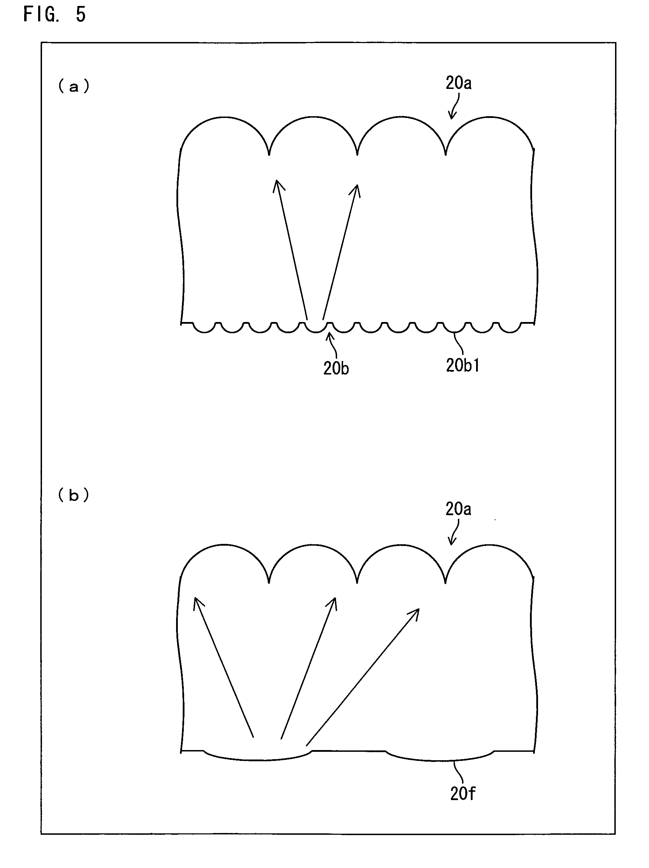

(a) of Fig. 5 is a cross sectional view illustrating a configuration of a light guide plate having curved plane structures and a microlens group. (b) of Fig. 5 is a cross sectional view illustrating a configuration of a light guide plate having curved plane structures and scatterers.

Fig. 6

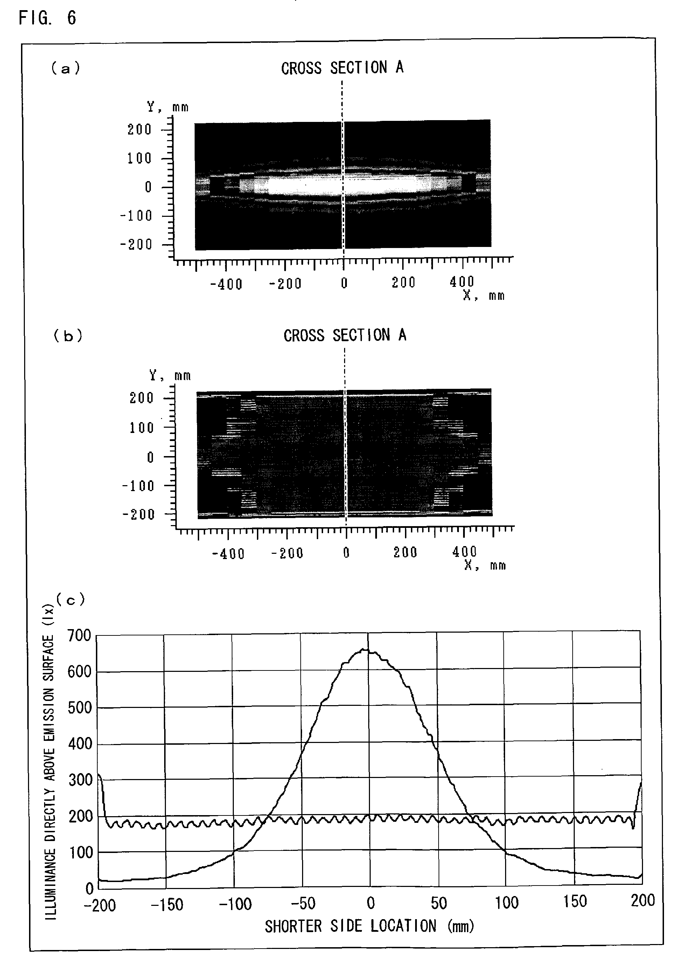

Fig. 6 illustrates a relation between existence of a curved plane structure in a light guide plate and illuminance distribution on an emission surface. (a) of Fig. 6 illustrates two-dimensional illuminance distribution on the emission surface exhibited in a case where the light guide plate has a curved plane structure. (b) of Fig. 6 illustrates two-dimensional illuminance distribution on the emission surface exhibited in a case where the light guide plate does not have a curved plane structure. (c) of Fig. 6 is a graph illustrating illuminance distribution in a Y direction in a middle part of the light guide plate having the configuration of (a) or (b) of Fig. 6.

Fig. 7

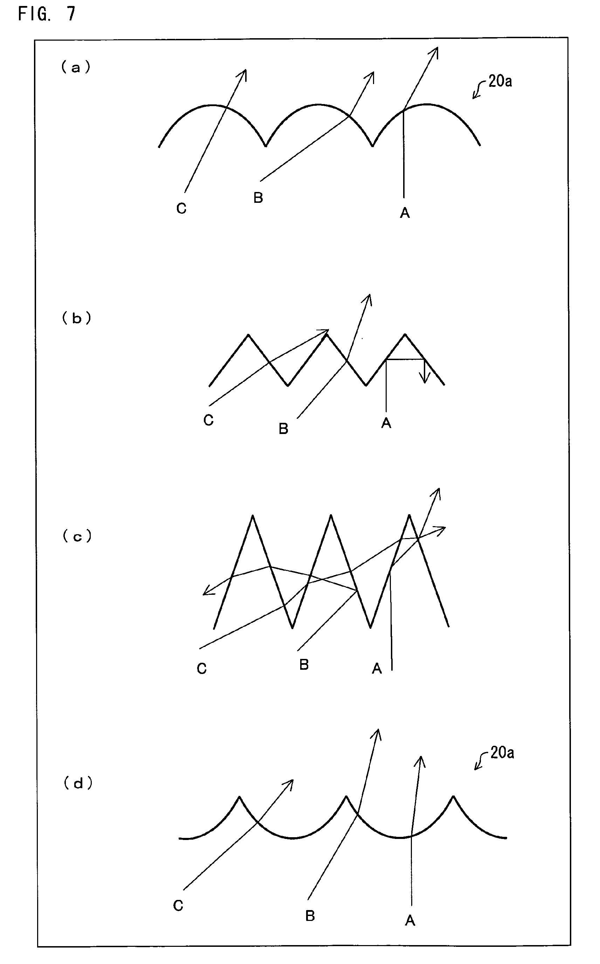

Fig. 7 is a cross sectional view illustrating paths of light guided in a light guide plate. (a) of Fig. 7 illustrates a configuration (Example of the present invention) in which an emission surface of a light guide plate has a curved plane structure. (b) of Fig. 7 illustrates a configuration (Conventional Example 1) in which an emission surface of a light guide plate has prism structures each having an apex angle of 90°. (c) of Fig. 7 illustrates a configuration (Conventional Example 2) in which an emission surface of a light guide plate has prism structures each having an apex angle of 5°. (d) of Fig. 7 illustrates another configuration of the curved plane structure 20a illustrated in (a) of Fig. 7.

Fig. 8

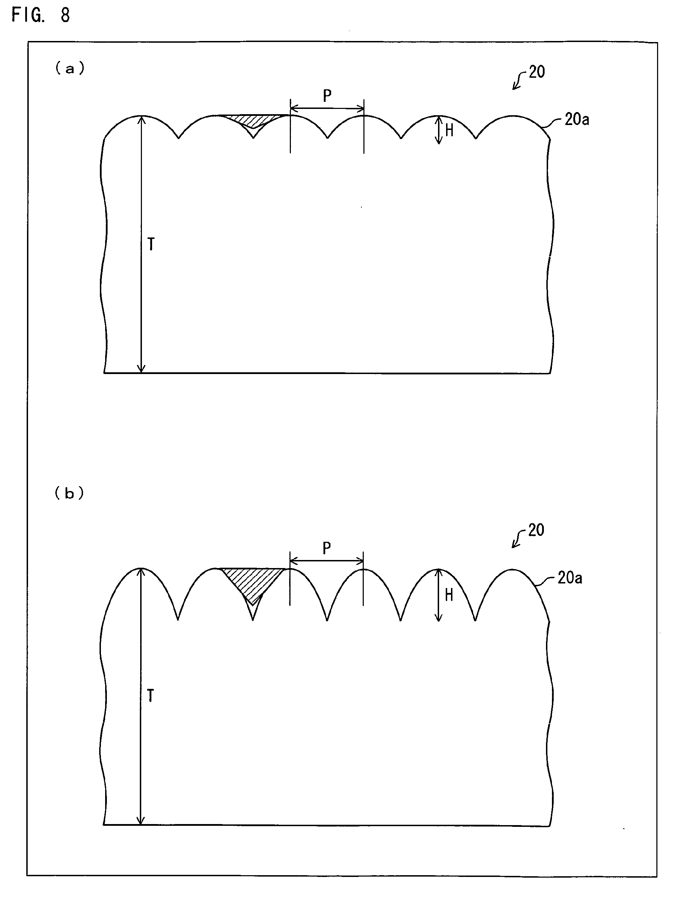

Fig. 8 is a lateral view illustrating a lateral shape of a light guide plate in an X direction. (a) of Fig. 8 illustrates a light guide plate having a curved plane structure whose height is small. (b) of Fig. 8 illustrates a light guide plate having a curved plane structure whose height is large.

Fig. 9

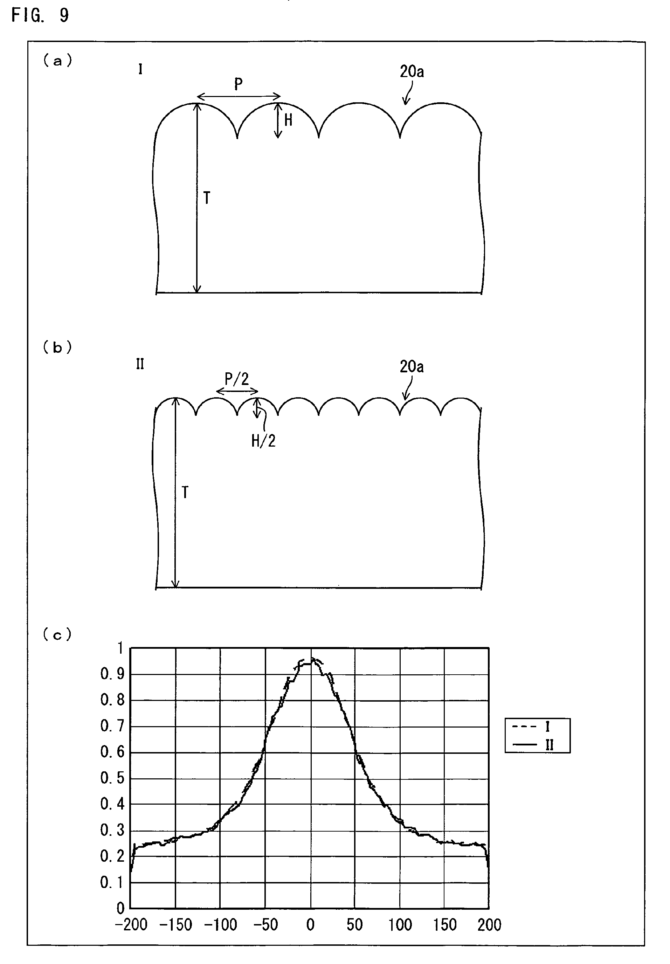

Fig. 9 is a view illustrating another modification of a light guide plate of the light source module. (a) of Fig. 9 is a cross sectional view schematically illustrating a configuration of a light guide plate (configuration I) having a curved plane structure formed under a condition in which H (height)/P (interval) is 0.4 with respect to a thickness T of the light guide plate. (b) of Fig. 9 is a cross sectional view schematically illustrating a configuration of a light guide plate (configuration II) having curved plane structures whose height is H/2 and which are arrange at intervals of P/2, unlike the curved plane structures of (a). (c) of Fig. 9 is a graph indicating that an effect of confining light is not changed by halving the interval P, provided that a ratio between the height H and the interval P is not changed.

Fig. 10

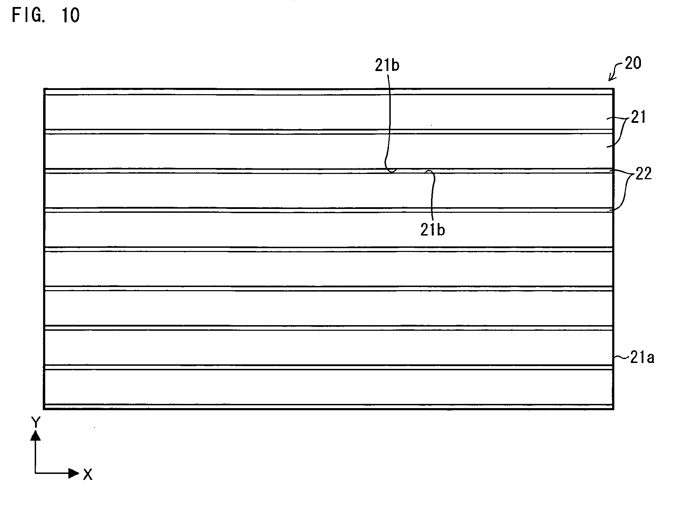

Fig. 10 is a plane view illustrating another modification of the light guide plate of the light source module.

Fig. 11

Fig. 11 is a plane view illustrating a planar illumination device of Patent Literature 1.

Fig. 12

Fig. 12 is a cross sectional view illustrating a configuration of prism structures formed in the planar illumination device disclosed in Patent Literature 1.

Fig. 13

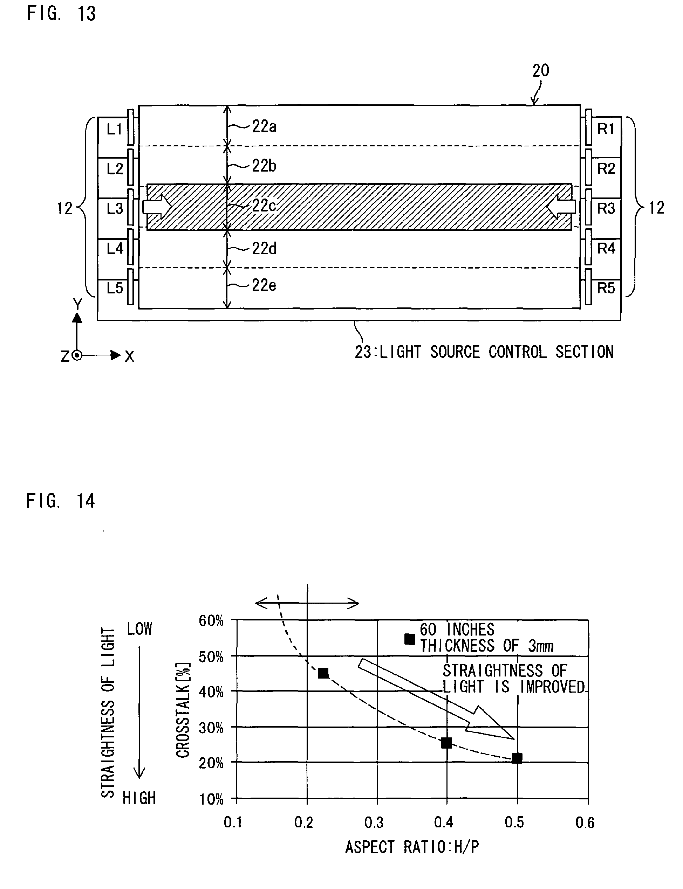

Fig. 13 is a schematic view for explaining backlight blinking carried out in a light source module.

Fig. 14

Fig. 14 is a graph illustrating a correlation between (i) straightness of light and (ii) an aspect ratio H/P (where "H" is a height of the curved plane structure 20a and "P" is an interval between the curved plane structures 20a).

Description of Embodiments

The following description will discuss an embodiment of the present invention with reference to Figs. 1 through 10, 13, and 14. Fig. 2 is an exploded perspective view of a liquid crystal display device (electronic apparatus) including a light source module of the present embodiment.

As an example of an electronic apparatus including a light source module 10 of the present embodiment, a liquid crystal display device 1 includes a chassis 2, the light source module 10, a liquid crystal panel 3, and a bezel 4, which are stacked in this order (see Fig. 2). The light source module 10 includes (i) a reflecting sheet 11 serving as a reflective plate, (ii) LED (Light Emitting Diode) 12 serving as a light source, (iii) an LED substrate 13, (iv) a reflector 14, (v) a light guide plate 20, (vi) a diffusing plate 15, and (vii) an optical sheet group 16 (see Fig. 2). Note that the diffusing plate 15 and the optical sheet group 16 are not essential for the present invention.

Fig. 3 is a cross sectional view illustrating a partial configuration of the liquid crystal display device 1 including the light source module 10. The LED 12, the LED substrate 13, and the reflector 14 are provided on an end of the light guide plate 20 (see Fig. 3). With the configuration, the LED 12 emits light entering the light guide plate 20 via one edge surface 21a, and then the light is caused to exit through an emission surface 20d of the light guide plate 20 so that the liquid crystal panel 3 is irradiated with the light via the diffusing plate 15 and the optical sheet group 16. As such, the light source module 10 of the present embodiment employs a side edge (also called as "side light") system. Note that light exits from the light guide plate 20 via a surface other than the emission surface 21d. However, such light is reflected back to the light guide plate 20 by the reflecting sheet 11 provided on surfaces other than the emission surface 20d and a surface(s) on which the LED 12 is provided. With the configuration, most of light will be emitted from the emission surface 21d. Note that, in the present embodiment, (i) a longer side direction of the light guide plate 20 is assumed to be an "X direction", (ii) a normal direction with respect to the light guide plate 20 is assumed to be a "Z direction", and (iii) a direction perpendicular to the X direction and the Z direction is assumed to be a "Y direction". The Y direction can be defined also as a shorter side direction of the light guide plate 20, as contrasted with the longer side direction (X direction) of the light guide plate 20.

Fig. 1 schematically illustrates a configuration of the light source module 10 of the present embodiment. (a) of Fig. 1 is a top view, and (b) of Fig. 1 is a lateral view. The LED 12 is made up of LEDs L1 through L5 and LEDs R1 through R5, which are provided on both ends in the longer side direction of the light guide plate 20 so as to emit light entering the light guide plate 20 (see (a) and (b) of Fig. 1). Specifically, the LEDs L1 through L5 are provided so as to face the respective LEDs R1 through R5 in the longer side direction. Note that the light source module 10 further includes a light source control section (not illustrated in (a) and (b) of Fig. 1) for selectively turning on the LEDs L1 through L5 and the LEDs R1 through R5 (i.e., for carrying out selective lighting). The light source control section can control all the LEDs L1 through L5 and the LEDs R1 through R5 to concurrently emit light.

The emission surface (upper surface) 20d of the light guide plate 20 have curved plane structures 20a each of which is made up of a curved plane. The curved plane structures 20a are formed as a linear pattern along the longer side direction (X direction) of the light guide plate 20. That is, the emission surface 20d of the light guide plate 21 has a plurality of curved plane structures (curved plane structure sections) 20a made up of respective curved planes whose ridges 20e extend in the longer side direction. Note that the curved plane structure 20a is not a member provided on the light guide plate 20 as a separate member but is a structure formed in the emission surface 20d itself of the light guide plate 20 (i.e., the curved plane structure 20a is formed in the light guide plate 20 itself).

In the present embodiment, it is preferable that the curved plane structures 20a formed in the light guide plate 20 satisfy the following relation:

$$0.2 < H/P < 0.5$$

where "H" is a height of the curved plane structure 20a in a direction perpendicular to the emission surface and "P" is an interval between adjacent curved plane structures 20a. That is, H/P (which is a ratio between the height H and the interval P (i.e., aspect ratio)) preferably falls within a range between 0.2 and 0.5. More preferably, the aspect ratio H/P falls within a range between 0.3 and 0.4. In a case where the aspect ratio H/P is set to the range between 0.2 and 0.5, it is possible to reduce a variation in crosstalk amount (which indicates a degree of straightness of light) with respect to the aspect ratio, and accordingly property fluctuation of the light source module can be suppressed.

Fig. 14 is a graph illustrating a correlation between (i) a ratio between the height H and the interval P (i.e., an aspect ratio H/P) and (ii) straightness of light. In the graph of Fig. 14, a crosstalk amount (%) (in emitted light between adjacent LEDs) is employed as a parameter for indicating a degree of straightness of light. As the crosstalk amount becomes smaller, the straightness of light becomes higher. Moreover, the graph of Fig. 14 indicates a result obtained by using a light guide plate 20 having a longer side length of 60 inches and a thickness of 3 mm.

As shown in Fig. 14, as the aspect ratio becomes smaller, the crosstalk amount becomes larger. That is, the straightness of light becomes lower as the aspect ratio becomes smaller. In a case where the aspect ratio $H/P \geq 0.2$, the crosstalk amount largely changes with respect to the aspect ratio, and the crosstalk amount itself is relatively large. On the other hand, in a case where 0.2 < aspect ratio H/P < 0.5, the change in crosstalk amount (straightness of light) is relatively small with respect to the aspect ratio, and the crosstalk amount itself is small.

This shows that the aspect ratio H/P of the curved plane structure 20a is preferably set to satisfy 0.2 < H/P < 0.5. In the case where the aspect ratio falls within the range between 0.2 and 0.5, the variation in straightness of light can be reduced. Moreover, even in a case where the curved plane structures 20a do not have exactly identical shapes, the straightness of light does not vary significantly. Note that, in a case where the aspect ratio H/P = 0.5, the curved plane structure 20a has a semi-cylindrical shape.

A microlens group 20b is provided, as a light path changing section, on a lower surface 20c (opposite to the emission surface 20d; back surface) of the light guide plate 20, which lower surface 20c is opposite to the curved plane structures 20a (see (b) of Fig. 1).

The microlens group 20b is a lens group for extracting light guided in the light guide plate 20. Specifically, the microlens group 20b changes a direction of the light (i.e., changes a light path), which is guided in the light guide plate 20, so that the light is extracted through the emission surface 20d. The microlens group 20b is provided such that the light is uniformly emitted through the emission surface 20d of the light guide plate 20. The microlens group 20b is made up of microlenses arranged at identical intervals. The interval between the microlenses is smaller than the interval P between the curved plane structures 20a. Specifically, the interval between the microlenses is 85 $\mu$m.

In the present embodiment, the light path changing section is configured by the microlens group 20b. However, the present embodiment is not limited to this, as long as the light path changing section is configured by a member which can change a direction of light (i.e., change a light path) guided in the light guide plate 20. For example, the light path changing section can be a scatterer which scatters (diffuses) light guided in the light guide plate 20. In this case, the light path changing section is configured by white scatterers dispersed on the lower surface 20c of the light guide plate 20. Note that each of the white scatterers can have a dot shape or a linear shape. Alternatively, scatterers can be employed each of which has a shape such as a prism shape. Note that the white scatterers can be formed by, for example, screen printing. Meanwhile, the scatterer having the prism shape can be formed by a method such as extrusion molding, injection molding, or press processing. In the present embodiment, the light path changing section is preferably configured by the microlens group 20b in order to secure directivity of light which is to be extracted through the emission surface 20d.

The following description will discuss the microlens employed in an Example of the present invention.

The microlens is a structural object which is (i) provided on the light guide plate 20 and (ii) made of resin having a refractive index substantially identical with that of the light guide plate 20. The microlens of the present Example can be formed by (i) applying the resin to the light guide plate 20 by an ink-jet device and then (ii) hardening the resin by an ultraviolet ray. By using the ink-jet device for applying the resin, it is possible to minutely apply the resin with high position accuracy. Therefore, it is possible to carry out uniform pattern printing, regardless of a size of an area in which the microlenses are provided. In the present Example, each of the microlenses is controlled to have a diameter falling within a range between approximately 30 $\mu$m and 70 $\mu$m, and the microlenses are arranged at intervals of 85 $\mu$m. In an area where the microlens is not provided, the diameter of the microlens is controlled to be 0 $\mu$m in the pattern printing.

Note that the refractive index of the microlens is preferably identical with that of a material of the light guide plate. However, it has been confirmed that, (i) in a case where the refractive index of the microlens is $\pm 10\%$ of that of the material of the light guide plate, directivity of light to be extracted is sufficiently secured and (ii) in a case where the refractive index of the microlens is $\pm 3\%$ of that of the material of the light guide plate, a good result can be obtained in which unnecessary light scattering is hardly caused.

Meanwhile, the light path changing section of the light guide plate 20 can be a member (scatterer) which is provided by printing ink containing a diffusion material. In general, scatterers can be formed by screen printing with the use of a mask. In such a forming method, however, the scatterers cannot be formed in a pattern as minute as that of the microlenses.

(a) of Fig. 4 illustrates how light is diffused by a microlens 20b1 which is one of microlenses included in the microlens group 20b. In (a) of Fig. 4, (i) a left part is a schematic view illustrating a scattering characteristic on an x-z plane and (ii) a right part is a schematic view illustrating a scattering characteristic on a y-z plane. (b) of Fig. 4 illustrates how light is diffused by a diffusion material (scatterer). In (b) of Fig. 4, (i) a left part is a schematic view illustrating a scattering characteristic on an x-z plane and (ii) a right part is a schematic view illustrating a scattering characteristic on a y-z plane.

The microlens 20b1, serving as the light path changing section, has a refractive index identical with that of the light guide plate 20. Under such a condition, a direction of light is changed (i.e., a light path is changed) by refraction and reflection on a surface of the microlens 20b1. Specifically, the microlens 20b1 (i) hardly changes an angle of the light path in a direction (X direction in Fig. 4) in which a light source is directed and in a perpendicular direction (Y direction in Fig. 4) perpendicular to the X direction but (ii) mainly changes the angle of the light path in the Z direction (see (a) of Fig. 4). The microlens 20b1, serving as the light path changing section, therefore secures directivity of light, and accordingly straightness of light in the light guide plate 20 can be improved.

Meanwhile, in a case where the pattern (scatterer) formed by the ink containing the diffusion material is employed, a direction of light path is changed by utilizing diffusion reflection of light, which is caused by the diffusion material. With the configuration, the pattern (scatterer) is more likely to diffuse light in a wider range of angle, as compared to the microlens 20b1. Note, however, that, in terms of the effect of confining light in the shorter side direction, the pattern (scatterer) is not inferior to the microlens, due to the effect of the curved plane structure 20a formed in the emission surface of the light guide plate 20.

(a) of Fig. 5 is a cross sectional view illustrating a configuration of the light guide plate 20 in which the curved plane structures 20a are formed and on which the microlens group 20b is provided. (b) of Fig. 5 is a cross sectional view illustrating a configuration of the light guide plate 20 in which the curved plane structures 20a are formed and on which scatterers 20f are provided.

As above described, each of the scatterers 20f cannot be formed as small as the microlens 20b1. Under the circumstances, in a case where the scatterers 20f are provided as the light path changing section, each of the scatterers 20f sometimes becomes larger than each of the curved plane structures 20a, depending on a size of the curved plane structure 20a (see (b) of Fig. 5).

As above described, in the light source module of the present embodiment, the light guide plate 20 has (i) the lower surface 20c on which the microlens group 20b is provided for causing light to be extracted through the emission surface 20d and (ii) the emission surface 20d in which the curved plane structures 20a are formed. With the configuration, it is possible to suppress, by the curved plane structure 20a, spread of light in the shorter side direction (Y direction), while securing directivity of light which is extracted through the emission surface 20d by the microlens group 20b. This makes it possible to improve straightness of light in the light guide plate 20.

Fig. 6 illustrates a relation between existence of the curved plane structure 20a in the light guide plate 20 and illuminance distribution on the emission surface. (a) of Fig. 6 illustrates two-dimensional illuminance distribution on the emission surface 20d (i.e., X-Y plane) exhibited in a case where the light guide plate 20 has the curved plane structure 20a. (b) of Fig. 6 illustrates two-dimensional illuminance distribution on the emission surface 20d (i.e., X-Y plane) exhibited in a case where the light guide plate 20 does not have the curved plane structure 20a. (c) of Fig. 6 is a graph illustrating an illuminance distribution in the Y direction in a middle of the light guide plate having the configuration of (a) or (b) of Fig. 6. Note that (a) through (c) of Fig. 6 show the results obtained when only the LED L3 and the LED R3 (see (a) and (b) of Fig. 1) are turned on.

As is clear from (a) and (c) of Fig. 6, in a case where the curved plane structures 20a are formed in the emission surface 20d, light emitted from the LEDs L3 and R3 is guided in the light guide plate 20 without spreading in the shorter side direction (Y direction), due to the effect of the curved plane structures 20a. Then, guided light in the light guide plate 20 is extracted through the emission surface 20d by the microlens group 20b. That is, in the case where only the LED L3 and the LED R3 are tuned on, the light is emitted from a particular illumination area (corresponding to the LED L3 and the LED R3) in the emission surface 20d of the light guide plate 20.

On the other hand, as is clear from (b) and (c) of Fig. 6, in a case where the curved plane structures 20a are not formed in the emission surface 20d, light emitted from the LEDs L3 and R3 spreads in the shorter side direction (Y direction), and is accordingly emitted from the entire emission surface 20d. That is, even thought only the LED L3 and the LED R3 are turned on, the light is emitted not only from a particular area but also from the other area in the emission surface 20d.

As above described, in a case where the LEDs L1 through L5 and the LEDs R1 through R5 are selectively turned on in the light source module of the present embodiment, it is possible to accurately emit (extract) light from an area in the emission surface 20d which area corresponds to the selected LEDs. That is, by selectively turning on the LEDs, it is possible to control an illumination area in the emission surface 20d of the light guide plate 20.

With regard to the liquid crystal display device 1, there is a problem of blur in video, unlike a CRT (Cathode-Ray Tube) display device. In the CRT display device, a non-lighting period, during which a pixel does not emit light, is given between (i) a lighting period of the pixel in a frame and (ii) another lighting period of the pixel in a next frame. Therefore, an image lag hardly occurs. On the other hand, the liquid crystal display device 1 employs a "hold-type" display method in which such a non-lighting period is not provided. Therefore, an image lag occurs, and such an image lag is recognized by a user as blur in video.

In order to avoid such a problem, a technique called "backlight blinking" has been proposed. According to the backlight blinking, the light source module 10, which is used as a backlight of the liquid crystal display device 1, is divided into blocks, and the blocks are controlled to be sequentially turned off in sync with a timing at which a video signal is applied to the liquid crystal panel 3. Consequently, a black display is inserted between an image display and a next image display. With the configuration, a pseudo impulse-type display is realized, and thereby an image lag can be suppressed and electric power consumption can be reduced.

The following description will discuss the backlight blinking with reference to Fig. 13. Fig. 13 is a schematic view illustrating backlight blinking carried out in the light source module 10. The light source module 10 includes a light source control section 23 (see Fig. 13). In the liquid crystal display device 1 including such a light source module 10, the light source control section 23 selectively controls the LEDs to emit light for a predetermined time period such that an area, to which a video signal has been supplied, is illuminated in sync with a vertical scanning in one (1) frame of the video signal. With the configuration, it is possible to appropriately irradiate, with blinking light, only a particular area in the light guide plate 20. This makes it possible to improve a video characteristic.

The following description will concretely discuss how backlight blinking is carried out, in a case where a screen is divided into 5 frames, i.e., scan frames 22a, 22b, 22c, 22d, and 22e (see Fig. 13). In the configuration shown in Fig.

13, the LED 12, which is provided on both sides in the longer side direction of the light guide plate 20, is also divided into 5 blocks so as to correspond to the respective scan frames 22a through 22e. Each of the 5 blocks of the LED 12 is made up of (i) one of the LEDs L1 through L5 provided on a left side in the longer direction of a corresponding one of the scan frames 22a through 22e and (ii) one of the LEDs R1 through R5 provided on a right side in the longer direction of the corresponding one of the scan frames 22a through 22e. For example, a block of the LED 12 corresponding to the scan frame 22d is made up of the LEDs L3 and L4. In a case where, for example, light is emitted from only the scan frame 22c, the light source control section 23 of the light source module 10 controls the LEDs L3 and R3 of the LED 12 to emit light. With the configuration, it is possible to selectively control the scan frames 22a through 22e in the liquid crystal display device 1 to emit light in sync with a vertical scanning in one (1) frame of the video signal. This makes it possible to improve a video characteristic.

The following description will discuss an effect of the curved plane structure 20a, with reference to (a) through (d) of Fig. 7. Fig. 7 is a cross sectional view illustrating paths of light guided in the shorter side direction in the light guide plate. (a) of Fig. 7 illustrates a configuration (Example of present invention) in which the emission surface of the light guide plate 20 has the curved plane structures 20a. (b) of Fig. 7 illustrates a configuration (Conventional Example 1) in which an emission surface of a light guide plate 20 has prism structures each having an apex angle of 90°. (c) of Fig. 7 illustrates a configuration (Conventional Example 2) in which an emission surface of a light guide plate 20 has prism structures each having an apex angle of 5°. (d) of Fig. 7 illustrates another configuration of the curved plane structures 20a illustrated in (a) of Fig. 7. Note that the curved plane structure 20a illustrated in (a) of Fig. 7 has a ratio H/P (i.e., a ratio between the height H and the interval P) of 0.4.

With regard to a configuration for causing light, guided at various angles in a light guide plate, to efficiently exit through an emission surface, it is important whether or not the light is totally reflected by the emission surface. In the light guide plate, as larger amount of light is totally reflected by the emission surface, light exit efficiency from the emission surface becomes lower. On the other hand, as smaller amount of light is totally reflected by the emission surface, light exit efficiency from the emission surface becomes higher. That is, in order to cause light, guided in the light guide plate, to efficiently exit through the emission surface, it is important to prevent the light, which reaches the emission surface at various angles, from satisfying the total reflection condition. In actuality, with regard to light guided in the light guide plane, it is necessary to consider total reflection conditions in the X direction (longer side direction) and the Y direction (shorter side direction). However, in the examples illustrated in (a) through (d) of Fig. 7, only the total reflection condition in the Y direction is considered, on the assumption that the total reflection condition in the X direction is not satisfied.

The curved plane structure 20a illustrated in (a) of Fig. 7 has a surface shape which continuously changes (in the shorter side direction), and therefore effectively extracts light, which has reached the emission surface at various angles. With the configuration, it is possible to efficiently (i) extract the light, which has reached the emission surface at various angles, and (ii) causes the light to be emitted through the emission surface. In (a) of Fig. 7, such light at various angles is illustrated as (i) vertical light A perpendicular to the shorter side direction and (ii) light C guided at a small angle with respect to the shorter side direction. Note that the light C guided at the small angle tends to be totally reflected by an almost horizontal plane (i.e., tends to satisfy the total reflection condition). In view of this, according to the shape of the curved plane structure 20a illustrated in (a) of Fig. 7, such an almost horizontal plane is located in an upper part of the semi-cylindrical shape, that is, located in a part which the light C is difficult to reach. Therefore, the light C guided at the small angle reaches a plane inclined with respect to the shorter side direction, and accordingly the light C does not satisfy the total reflection condition.

On the other hand, in a case where the emission surface of the light guide plate 20 has prism structures each having an apex angle of 90°, vertical light A is totally reflected back in the light guide plate 20 because the vertical light A satisfies the total reflection condition (see (b) of Fig. 7). Moreover, light C guided at the small angle does not satisfy the total reflection condition and once exits through the emission surface. However, the light exited through the emission surface enters an adjacent prism structure and returns to the light guide plate again. In a case where the emission surface of the light guide plate 20 has prism structures each having an apex angle of 5°, both vertical light A and light C guided at the small angle do not satisfy the total reflected condition and exit through the emission surface (see (c) of Fig. 7). However, those lights A and C are more likely to enter an adjacent prism structure. For the reasons above, in a case where prism structures are formed in the emission surface of the light guide plate 20 as illustrated in (b) and (c) of Fig. 7, light exit efficiency from the light guide plate 20 is decreased because lights tend to be confined in the light guide plate 20.

In the light source module 10 of the present embodiment, the microlens group 20a serving as the light path changing section changes a direction of light (i.e., changes a light path), guided in the light guide plate 20, so that the light is extracted through the emission surface 20d. The microlens group 20a efficiently generates vertical light A (as illustrated in (a) of Fig. 7), and therefore the effect of the curved plane structure 20a is further improved. On the other hand, in a case where prism structures are formed in the emission surface of the light guide plate 20 as illustrated in (b) or (c) of Fig. 7, such prism structures bring about an adverse effect by which light cannot efficiently exit from the light guide plate.

The curved plane structure 20a illustrated in (a) of Fig. 7 is made up of a convex cylindrical surface projecting outward from the emission surface of the light guide plate 20. On the other hand, the curved plane structure 20a illustrated in (d) of Fig. 7 is made up of concave cylindrical surface, which is formed as a hollow on the emission surface of the light guide plate 20. According to the configuration illustrated in (d) of Fig. 7, vertical light A is not totally reflected back in the light guide plate 20. Therefore, the curved plane structure 20a illustrated in (d) of Fig. 7 can efficiently cause light to exit from the light guide plate, as compared to the configurations illustrated in (b) and (c) of Fig. 7.

If the thickness of the light guide plate is the same, the shape illustrated in (a) of Fig. 7 tends to secure a cross sectional area larger than that of the prism shape. Therefore, the configuration in which the curved plane structure 20a is formed in the emission surface of the light guide plate 20 (i) achieves high optical coupling efficiency on a surface via which light from the LED enters and (ii) is less likely to cause leakage of light.

In a case where the light source module 10 of the present embodiment is used as a planar illumination device such as a backlight, various kinds of optical sheets are generally provided immediately above the light guide plate 20. In view of this, if the emission surface of the light guide plate 20 has a sharp-edged shape such as a prism shape, an optical sheet on the emission surface may be damaged by rubbing, etc. On the other hand, in a case where the curved plane structure 20a is formed in the emission surface of the light guide plate 20, the optical sheet will not be damaged by rubbing, etc.

The following description will further discuss, in detail, the shape of the curved plane structure 20a. The above descriptions have discussed the configuration in which the curved plane structure 20a has the convex cylindrical shape. Note, however, that the curved plane structure 20a can have a cross sectional shape perpendicular to the longer side direction (X direction), which cross sectional shape partially contains a straight line, provided that the cross sectional shape also contains an arc. Such a shape can be formed by carrying out a press processing on the light guide plate 20.

The following description will discuss a relation between a height H of the curved plane structure 20a and an optical coupling efficiency on a light incidence plane of the light guide plate 20. Fig. 8 is a lateral view illustrating a lateral shape of the light guide plate 20 in the X direction. (a) of Fig. 8 illustrates the light guide plate 20 having the curved plane structure 20a whose height H is small. (b) of Fig. 8 illustrates the light guide plate 20 having the curved plane structure 20a whose height H is large. Note that the light guide plates 20 shown in (a) and (b) of Fig. 8 are assumed to have (i) identical intervals P between curved plane structures 20a and (ii) identical thicknesses T.

In the present embodiment, light from the LED enters the light guide plate 20 via a lateral surface in the longer side direction of the light guide plate 20. In a case where the curved plane structure 20a has a large height H in the light incidence plane (i.e., a lateral plane of the light guide plate 20 in the X direction) (see (b) of Fig. 8), (i) a light incidence area becomes small, (ii) light leaks from notches (indicated by oblique lines in (b) of Fig. 8), and (iii) optical coupling efficiency is decreased. On the other hand, in a case where the curved plane structure 20a has a small height H in the light incidence plane (i.e., a lateral plane of the light guide plate 20 in the X direction) (see (a) of Fig. 8), (i) a light incidence area becomes large, (ii) leakage of light from notches can be reduced, and (iii) optical coupling efficiency can be improved.

Therefore, as the height H of the curved plane structure 20a increases, optical coupling efficiency on the light incidence plane and leakage of light are decreased. Approximately speaking, in a case where the height H of the curved plane structure 20a is doubled, a leakage amount of light is doubled and a loss of optical coupling efficiency is also doubled.

In terms of optical coupling efficiency on and leakage of light from the light incidence plane, it is preferable that the height H of the curved plane structure 20a is not more than 10% of the thickness T of the light guide plate 20. In a case where the height H of the curved plane structure 20a is more than 10% of the thickness T of the light guide plate 20, optical coupling efficiency is unfavorably further decreased (i.e., leakage of light becomes approximately 5% of incident light). Meanwhile, in a case where the thickness T of the light guide plate 20 is small, the curved plane structure 20a may not be prepared unless the height H is not less than 5% of the thickness T. That is, in a case where the light guide plate 20 is thin, it is difficult to provide the curved plane structure 20a if the height H of the curved plane structure 20a is not more than 5% of the thickness T. Therefore, by taking into consideration a realistic dimension of the curved plane structure 20a, it is further preferable that the height H of the curved plane structure 20a is not less than 5% of but not more than 10% of the thickness T of the light guide plate 20. Specifically, for example, the thickness T of the light guide plate 20 is 4.2 mm, and the height H of the curved plane structure 20a is 0.2 mm. Note, however, that, in a case where the height H of the curved plane structure 20a is reduced while the interval P is maintained, the effect of confining light to the light guide plate 20 is decreased.

In a case where the interval P is made smaller while maintaining the aspect ratio H/P of the curved plane structure 20a, it is possible to secure a sufficient cross sectional area of the light guide plate while maintaining straightness of light. (a) of Fig. 9 is a cross sectional view schematically illustrating a configuration of the light guide plate 20 (configuration I) having the curved plane structure 20a formed under a condition in which H/P (i.e., height/interval) is 0.4 with respect to the thickness T of the light guide plate 20. (b) of Fig. 9 is a cross sectional view schematically illustrating a configuration of the light guide plate 20 (configuration II) having the curved plane structures 20a whose interval is P/2 and height is H/2, unlike the curved plane structure 20a shown in (a) of Fig. 9. As shown in (a) and (b) of Fig. 9, in a case where (i) the ratio between the height H and the interval P is maintained and (ii) the interval P is halved, the effect of confining light is not changed but the notch between adjacent curved plane structures 20a becomes 1/2. (c) of Fig. 9 is a graph indicating that the effect of confining light is not changed by halving the interval P, provided that the ratio between the height H and the interval P is not changed. In (c) of Fig. 9, the configuration I indicates a light guide plate 20 in which (i) an interval P between the curved plane structures 20a is 0.4 mm, (ii) a height H of the curved plane structure 20a is 0.16 mm, and (iii) a thickness T of the light guide plate 20 is 4.2 mm. Moreover, the configuration II indicates a light guide plate 20 in which (i) an interval P between the curved plane structures 20a is 0.2 mm, (ii) a height H of the curved plane structure 20a is 0.08 mm, and (iii) a thickness T of the light guide plate 20 is 4.2 mm. The configurations I and II have similar semi-cylindrical shapes of the curved plane structures 20a, where the semi-cylindrical shape of the configuration II is 1/2 of that of the configuration I.

As is clear from (c) of Fig. 9, the straightness of light is hardly different between the configuration I and the configuration II. In view of this, in a case where the configuration I is transformed into the configuration II by reducing the interval P, a leakage amount of light can be halved and a loss of optical coupling can also be halved. Moreover, in the case where the interval P is made smaller, the curved plane structures extending in the longer side direction become difficult to visually recognize.

The descriptions above have discussed the configuration in which a single light guide plate 20 is provided. However, the light source module 10 of the present embodiment is not limited to such a configuration. It is possible to employ a configuration in which, in order to carry out backlight blinking, a light guide plate 20 is made up of a plurality of light guides 21 which are juxtaposed to each other, via each interspace 22, in the shorter side direction (see Fig. 10). In this case, the LED 12 emits light entering the plurality of light guides 21 via an edge surface 21a, which is one of edge surfaces in the longer side direction of each of the plurality of light guides 21. Note that the LED 12 can emit light entering the plurality of light guides 21 via the other one of the edge surfaces in the longer side direction, instead of the edge surface 21a. Alternatively, the LED 12 can emit light entering the plurality of light guides 21 via both the edge surface 21a and the other one of the edge surfaces. That is, in the present invention, it is sufficient to cause the LED 12 to emit light entering the plurality of light guides 21 via at least one of the edge surfaces.

The present invention is not limited to the embodiments, but can be altered by a skilled person in the art within the scope of the claims. An embodiment derived from a proper combination of technical means disclosed in respective different embodiments is also encompassed in the technical scope of the present invention.

As above described, the light source module of the present invention includes a plurality of curved plane structure sections formed in the emission surface, the plurality of curved plane structure sections being made up of respective curved planes whose ridges extend in the longer side direction. Moreover, as above described, the electronic apparatus of the present invention includes the above described light source module.

This brings about an effect of suppressing spread of light in the direction (shorter side direction) perpendicular to the direction (longer side direction) in which the light source is directed.

In the light source module of the present invention, it is preferable that $0.2 < H/P < 0.5$, where "H" is a height of each of the plurality of curved plane structure sections and "P" is an interval between adjacent two of the plurality of curved plane structure sections.

According to the configuration, each of the plurality of curved plane structure sections has its tangent line whose inclination varies continuously. Such a configuration advantageously acts on the effects of (i) extracting light which has reached the emission surface at various angles and (ii) suppressing the spread of light in the shorter side direction. Moreover, according to the configuration, the plurality of curved plane structure sections are set to satisfy the relation $0.2 < H/P$ (height/interval) $< 0.5$. This makes it possible to (i) improve manufacturing efficiency in mass-producing light guide plates having the curved plane structure sections and (ii) suppress variation in characteristics with respect to nonuniformity in shapes. Further, in the case where H/P (i.e., a ratio between the height H and the interval P (aspect ratio)) is set to the range $0.2 < H/P < 0.5$, it is possible to (i) reduce variation in crosstalk amount (indicative of a degree of straightness of light) with respect to the aspect ratio and (ii) suppress property fluctuation of the light source module.

In the light source module of the present invention, it is preferable that an interval between adjacent two of the plurality of light path changing sections is shorter than an interval between adjacent two of the ridges.

According to the configuration, the interval between adjacent two of the plurality of light path changing sections is shorter than the interval between adjacent two of the ridges. This makes it possible to further suppress spread of light in the direction perpendicular to the direction (longer side direction) in which the light source is directed.

It is preferable that the light source module of the present invention further includes a light source control section for selectively controlling the plurality of light sources to emit light.

According to the configuration, the light source control section is provided for selectively turning on the plurality of light sources. Therefore, in a case where, for example, the light source module is applied to a liquid crystal display device (electronic apparatus), the light source control section selectively controls the plurality of light sources to emit light for a predetermined time period such that an area, to which a video signal has been supplied, is illuminated in sync with a vertical scanning in one (1) frame of the video signal. With the configuration, it is possible to appropriately irradiate, with blinking light, only a particular area in the light guide plate. This makes it possible to improve a video characteristic.

In the light source module of the present invention, it is preferable that each of the plurality of light path changing sections is a microlens.

With the configuration, it is possible to improve directivity of light which is to be extracted through the emission surface.

In order to attain the object, the electronic apparatus of the present invention includes the above described light source module.

In the light source module of the present invention, it is preferable that, in a case where a height of each of the plurality of curved plane structure sections is "H" and a thickness of the light guide plate is "T", the height H is not larger than 10% of the thickness T.

According to the configuration, the height H of each of the plurality of curved plane structure sections is not larger than 10% of the thickness T of the light guide plate. This makes it possible to (i) reduce leakage of light from notches between the plurality of curved plane structure sections and (ii) improve optical coupling efficiency.

The electronic apparatus of the present invention includes the light source module.

According to the configuration, it is possible to realize the light source module which can suppress spread of light in the direction perpendicular to the direction (longer side direction) in which the light source is directed.

Industrial Applicability

The present invention relates to (i) a light source module including a side edge (also called as "side light") type light guide plate for causing light, emitted from a light source, to exit through a surface of the light guide plate and (ii) an electronic apparatus including the light source module. The present invention is applicable to, for example, (i) a light source module such as a backlight or (ii) an electronic apparatus such as a liquid crystal display device.

Reference Signs List

1: Liquid crystal display device (electronic apparatus)
10: Light source module
12: LED (light source)
20: Light guide plate
20a: Curved plane structure (curved plane structure section)
20b: Microlens group (light path changing section)
20c: Lower surface
20d: Emission surface
20e: Ridge
21a: Edge surface
22a through 22e: Scan frame
23: Light source control section

**Claims**

1. A light source module comprising:

   a light guide plate;
   a plurality of light sources configured to emit light entering the light guide plate via at least one of edge surfaces that the light guide plate has in a longer side direction of the light guide plate;
   a plurality of light path changing sections for causing light, guided in the light guide plate, to be extracted through an emission surface of the light guide plate, the plurality of light path changing sections being provided on a surface of the light guide plate which surface is opposite to the emission surface; and
   a plurality of curved plane structure sections formed in the emission surface, the plurality of curved plane structure sections being made up of respective curved planes whose ridges extend in the longer side direction.

2. The light source module as set forth in claim 1, wherein:

$$0.2 < H/P < 0.5,$$

where "H" is a height of each of the plurality of curved plane structure sections and "P" is an interval between adjacent two of the plurality of curved plane structure sections.

3. The light source module as set forth in claim 1 or 2, wherein:

an interval between adjacent two of the plurality of light path changing sections is shorter than an interval between adjacent two of the ridges.

4. The light source module as set forth in any one of claims 1 through 3, further comprising:

a light source control section for selectively controlling the plurality of light sources to emit light.

5. The light source module as set forth in any one of claims 1 through 4, wherein:

each of the plurality of light path changing sections is a microlens.

6. The light source module as set forth in any one of claims 1 through 5, wherein:

in a case where a height of each of the plurality of curved plane structure sections is "H" and a thickness of the light guide plate is "T",
the height H is not larger than 10% of the thickness T.

7. An electronic apparatus comprising a light source module recited in any one of claims 1 through 6.

FIG. 1

(a)

(b)

FIG. 2

FIG. 3

FIG. 4

(a)

20b1

z
↑
y ⊙ → x

z

y

(b)

20f

z
↑
y ⊙ → x

z

y

FIG. 5

(a)

20a

20b

20b1

(b)

20a

20f

FIG. 6

(a)
CROSS SECTION A

(b)
CROSS SECTION A

(c)

FIG. 7

(a)

20a

C     B     A

(b)

C     B     A

(c)

C     B     A

(d)

20a

C     B     A

FIG. 8

(a)

(b)

FIG. 9

(a)

I

(b)

II

(c)

FIG. 10

FIG. 11

FIG. 12

$\theta = \phi$

FIG. 13

23:LIGHT SOURCE CONTROL SECTION

FIG. 14

**EP 2 557 354 A1**

<div align="center">

**INTERNATIONAL SEARCH REPORT**

</div>

| | International application No. |
|---|---|
| | PCT/JP2011/058945 |

**A. CLASSIFICATION OF SUBJECT MATTER**
*F21S2/00*(2006.01)i, *G02F1/13357*(2006.01)i, *F21Y101/02*(2006.01)n

According to International Patent Classification (IPC) or to both national classification and IPC

**B. FIELDS SEARCHED**

Minimum documentation searched (classification system followed by classification symbols)
F21S2/00, G02F1/13357, F21Y101/02

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-301805 A (Sharp Corp.), | 1-2,6-7 |
| Y | 24 December 2009 (24.12.2009), | 3-5 |
| | paragraph [0064]; fig. 1, 3 | |
| | (Family: none) | |
| Y | JP 2009-199886 A (Toyoda Gosei Co., Ltd.), | 3,5 |
| | 03 September 2009 (03.09.2009), | |
| | paragraph [0022]; fig. 15 | |
| | (Family: none) | |
| Y | JP 2009-283383 A (Panasonic Corp.), | 4 |
| | 03 December 2009 (03.12.2009), | |
| | paragraph [0024] | |
| | (Family: none) | |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 July, 2011 (04.07.11) | 12 July, 2011 (12.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/058945

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-205713 A  (Seiko Instruments Inc.), 16 September 2010 (16.09.2010), paragraph [0030]; fig. 6 & US 2009/0323372 A1    & KR 10-2010-0002112 A & CN 101614370 A | 1-7 |
| A | JP 2005-251566 A  (Nidec Copal Corp.), 15 September 2005 (15.09.2005), paragraph [0023]; fig. 2 & US 2005/0196123 A1    & KR 10-2006-0043378 A & CN 1664669 A | 1-7 |
| A | JP 2005-353406 A  (Toyota Industries Corp.), 22 December 2005 (22.12.2005), paragraphs [0029] to [0037]; fig. 1 (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009283383 A

- JP 2009031445 A